# EUROPEAN PATENT APPLICATION

(11) **EP 2 512 149 A2**
(43) Date of publication of application: **17.10.2012**
(21) Application number: 11193487.3
(22) Date of filing: 14.12.2011
(51) Int. Cl.: H04N 21/422, H04N 21/433, H04N 5/76, H04N 21/426

(54) **Broadcast receiving apparatus and control method for broadcast receiving apparatus**

(30) Priority: 14.04.2011 JP 2011090320
(71) Applicant: Kabushiki Kaisha Toshiba, Tokyo 105-8001 (JP)
(72) Inventor: Kuwahara, Kazuki, Tokyo, 105-8001 (JP)
(74) Representative: HOFFMANN EITLE

(57) **Abstract**

According to one embodiment, a broadcast receiving apparatus (100) includes a signal processor (105) configured to perform a predetermined signal processing on a received video signal, a receiver (114) configured to receive a signal from a remote controller (200) including a first key (200s) and a second key (200p), a controller (112) configured to control a recording module to record a program represented by the video signal output from the signal processor (105), to freeze-frame the program if a signal indicating selection of the first key is received, and to resume the program recorded in the recording module from a position where the program is freeze-frained if a signal indicating selection of the second key is received, and the program is being recorded.

## Description

Embodiments described herein relate generally to a broadcast receiving apparatus and a control method for a broadcast receiving apparatus.

In Japan, in addition to digital direct broadcasting by satellite (DBS), digital terrestrial broadcasting has now begun.

Because of increased capacity of recording means, recent television broadcast receiving apparatus is capable, for example, of receiving multiple broadcast signals simultaneously and recording all programs broadcast during a predetermined period.

A general architecture that implements the various features of the embodiments will now be described with reference to the drawings. The drawings and the associated descriptions are provided to illustrate the embodiments and not to limit the scope of the invention.
FIG. 1 is an exemplary block diagram showing an example of configuration of a broadcast receiving apparatus according to the embodiment.
FIG. 2 illustrates an example the remote controller of the broadcast receiving apparatus according to the embodiment.
FIG. 3 is an exemplary flowchart showing an example of operation of the broadcast receiving apparatus according to the embodiment.
FIG. 4 illustrates an example of the function setting window of the broadcast receiving apparatus according to the embodiment.
FIG. 5 illustrates an example of the time-shift-machine recording setting of the broadcast receiving apparatus according to the embodiment.
FIG. 6 illustrates an example of the time-shift-machine recording window of the broadcast receiving apparatus according to the embodiment.
FIG. 7 illustrates an example of the recording channel window for setting channels for time-shift-machine recording of the broadcast receiving apparatus according to the embodiment.

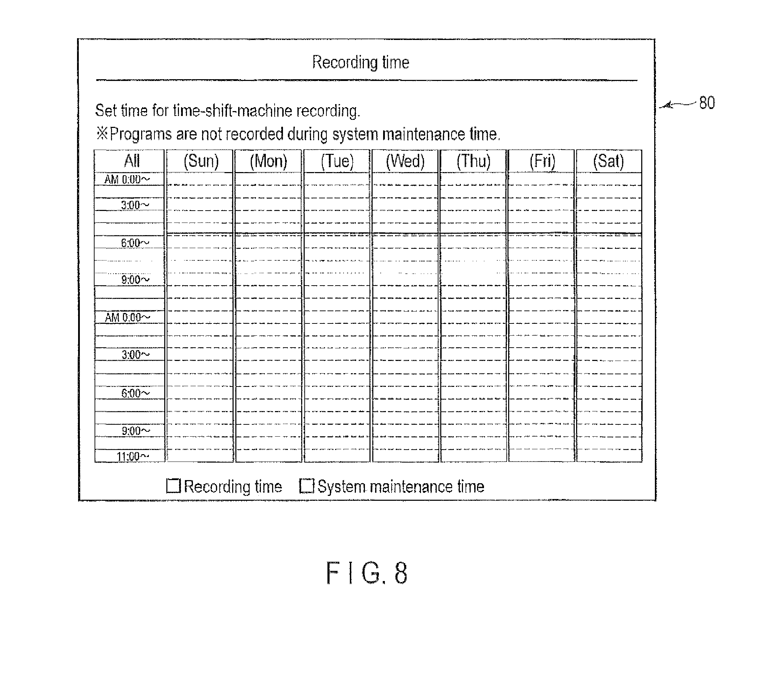

FIG. 8 illustrates an example of the recording time window for setting time for time-shift-machine recording of the broadcast receiving apparatus according to the embodiment.
FIG. 9 illustrates an example of the past program table indicating programs recorded by time-shift-machine recording of the broadcast receiving apparatus according to the embodiment.

Various embodiments will be described hereinafter with reference to the accompanying drawings.

In general, according to one embodiment, a video receiving apparatus includes a signal processor configured to perform a predetermined signal processing on a received video signal; a receiver configured to receive a signal from a remote controller including a first key and a second key; and a controller configured to control a recording module to record a program represented by the video signal output from the signal processor, to freeze-frame the program if a signal indicating selection of the first key is received, and to resume the program from a position where the program is freeze-framed by means of the recording module if a signal indicating selection of the second key is received, and the program is being recorded.

In the following, the broadcast receiving apparatus according to the embodiment will be described in details with reference to the drawings.

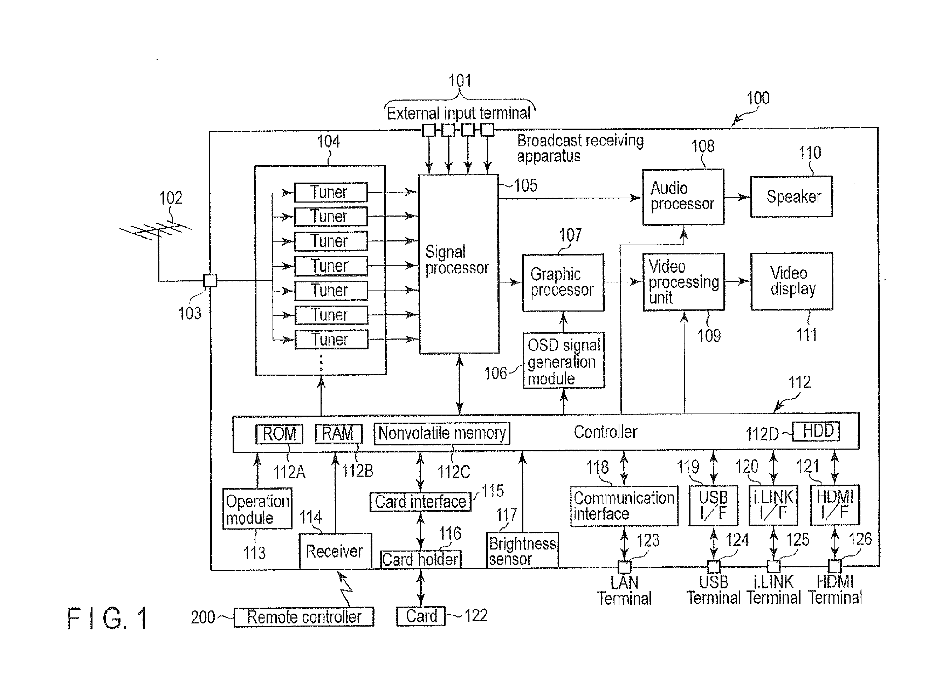

FIG. 1 shows the main signal processing system of the broadcast receiving apparatus 100 according to the embodiment.

The broadcast receiving apparatus 100 of the present embodiment includes a receiving module configured to selectively receive a video signal, a signal processor 105 configured to process the video signal received by the receiving module to enable the content represented by the signal to be displayed, an audio processor 108 configured to receive the signal output from the signal processor, a graphic processor 107, an on-screen display (OSD) signal generating module, a video processor 109, a speaker 110 configured to receive the signal output from the audio processor 108, a video display 111 configured to receive the signal output from the video processor 109, an operation module 113 to be operated by a user, a remote controller 200, a receiver 114 configured to receive a signal output from the remote controller, a brightness sensor 117, various interfaces, and a controller 112 configured to control operation of the broadcast receiving apparatus 100.

The receiving module includes an antenna 102 for receiving digital broadcasts and a tuner module 104 including a plurality of tuners for digital broadcasts. The antenna 102 for receiving digital broadcasts receives a digital television broadcast signal, and the received signal is supplied to the tuner module 104 via an input terminal 103. Each of the plurality of tuners of the tuner module 104 selects a broadcast signal of a desired channel. The plurality of tuners may include only digital tuners or include digital tuners and analog tuners.

The plurality of digital broadcast signals selected at the tuner module 104 are supplied to the signal processor 105. The signal processor 105 can receive a digital or analog video signal and an audio signal from an external device via an external input terminal 101.

The signal processor 105 demodulates the input video signal and audio signal to a digital video signal and a digital audio signal, outputs the digitized signals to the graphic processor 107 and the audio processor 108 after performing a predetermined digital signal processing.

The graphic processor 107 is capable of superimposing an OSD signal generated by an OSD signal generation module 106 on the digital video signal input from the signal processor 105, and outputs the resultant signal. The graphic processor 107 is also capable of selectively outputting one of the video signal output from the signal processor 105 and the OSD signal output from the OSD signal generation module 106, outputting a superimposed composite of these signals, or outputting each of these signals on one half of the screen.

The digital video signal output from the graphic processor 107 is supplied to the video processor 109. The video processor 109 converts the input digital video signal into an analog video signal which can be displayed on the video display 111, and outputs the converted signal to be displayed on the video display 111.

The audio processor 108 converts the input digital audio signal into an analog audio signal which can be output by the speaker 110, and outputs the converted signal to be output by the speaker 110.

In the broadcast receiving apparatus 100, all operations including the above-mentioned receiving operations are controlled by the controller 112.

The controller 112 includes a central processing unit (CPU) or the like. If operational information is received from the operation module 113, or if operational information output from the remote controller 200 is received from the receiver 114, the controller 112 controls each module integrally in accordance with the information.

For this integral control, the controller 112 mainly utilizes various kinds of recording means such as a read-only memory (ROM) 112A storing a control program executed by the CPU, a random access memory (RAM) 112B providing an operation area for the CPU, a nonvolatile memory 112C storing various setting information and control information, and a hard disk 112D storing a video signal of a program to be recorded, an audio signal, and program information signal or the like.

The controller 112 is connected to a card holder 116, in which a first memory card 112 can be inserted, via a card interface 115. This structure enables the controller 112 to transmit or receive data such as a video signal and an audio signal via the first memory card 112 inserted into the card holder 116 and the card interface 115. The controller 112 may be connected to a card holder, in which a second memory card can be inserted, via another card interface which is not shown in the drawings.

The controller 112 is connected to the brightness sensor 117. This structure enables the controller 112 to acquire ambient brightness information and to automatically control the brightness of the screen, for example.

The controller 112 is connected to a first LAN terminal 123 via a communication interface 118. This enables the controller 112 to transmit and receive data such as a video signal and an audio signal or the like via a LAN-accessible hard disk drive (HDD) connected to the first LAN terminal 123 and the communication interface 118. The controller 112 has a Dynamic Host Configuration Protocol (DHCP) server function, and controls the HDD by assigning an Internet Protocol (IP) address to the LAN-accessible HDD connected to the first LAN terminal 123. The controller 112 may be connected to a second LAN terminal via another communication interface, which is not shown in the drawings.

The controller 112 is connected to a USB terminal 124 via a USB interface 119. This structure enables the controller 112 to transmit and receive data such as a video signal and an audio signal or the like to and from each device connected to the USB terminal 124 via the USB interface 119.

The controller 112 is connected to an i.Link (registered trademark) terminal 125 via an i.Link (registered trademark) interface 120. This structure enables the controller 112 to transmit and receive data such as a video signal and an audio signal or the like to and from each device connected to the i.Link (registered trademark) terminal 125 via the i.Link (registered trademark) interface 120.

The controller 112 is capable of transmitting and receiving data such as a video signal and an audio signal or the like to and from each device connected to a High-Definition Multimedia Interface (HDMI) terminal 126 via an HDMI interface 121 which complies with the HDMI standard.

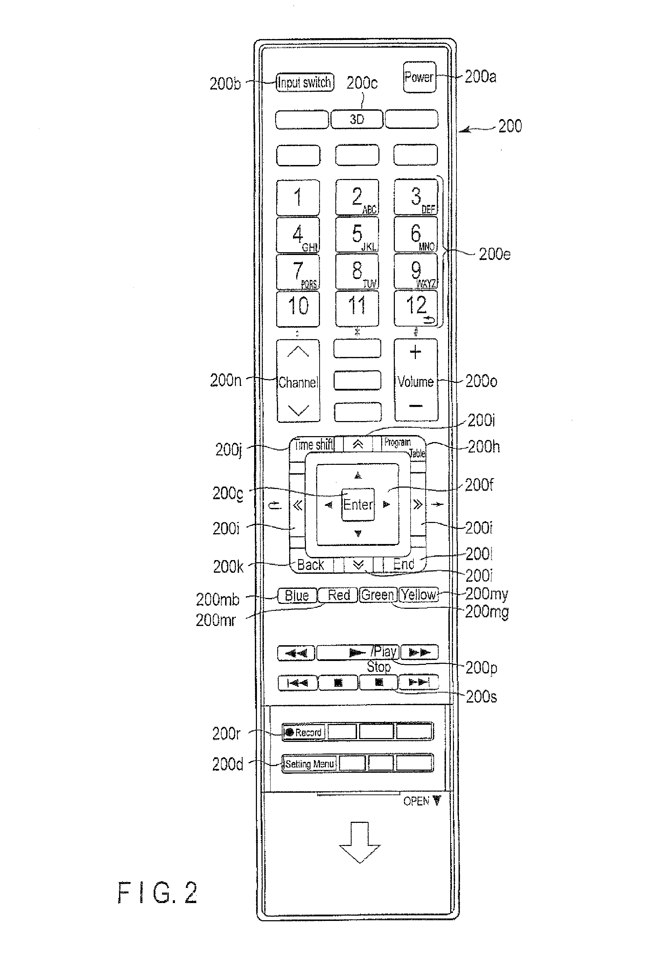

FIG. 2 shows the appearance of the remote controller 200. The remote controller 200 mainly includes a power key 200a, an input switching key 200b, a 3D key 200c, a setting menu key 200d, a broadcast channel direct selection key 200e, a cursor keypad 200f, an enter key 200g, a program table key 200h, a page switching key 200i, a time-shift key 200j, a back key 200k, an end key 2001, a blue key 200mb, a red key 200mr, a green key 200mg, a yellow key 200my, a channel key 200n, a volume control key 200a, a play key 200p, and a stop key 200s.

An example of operation for recording setting in the broadcast receiving apparatus 100 will be explained.

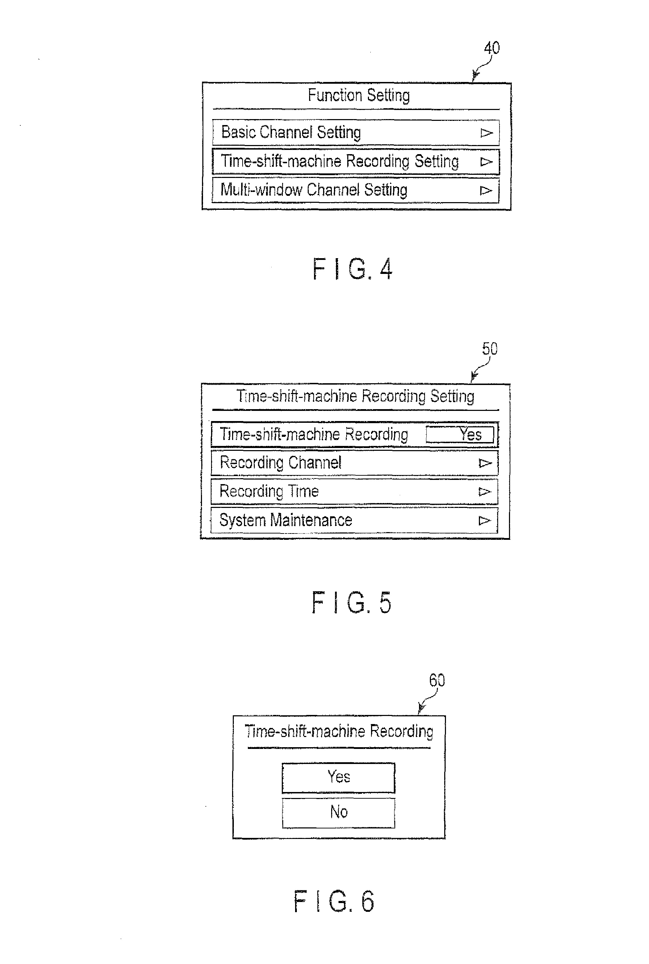

FIG. 4 shows an example of a function setting window of the broadcast receiving apparatus 100 according to the embodiment. When a viewer first selects the setting menu key 200d of the remote controller 200, selects an initial setting of the setting menu by using the cursor keypad 200f and the enter key 200g, and then selects the function setting of the initial setting window, the controller 112 controls the OSD signal generation module 106 to display a function setting window 40.

The function setting window 40 includes items such as "Basic Channel Setting," "Time-shift-machine Recording Setting" and "Multi-window Channel Setting". By using the time-shift-machine recording function, a program to be broadcast on a particular channel, at a particular time on a particular day of the week selected by the viewer can be recorded every week.

FIG. 5 shows an example of a time-shift-machine recording setting window 50 of the broadcast receiving apparatus 100 according to the embodiment. When the viewer selects the time-shift-machine recording setting by using the cursor keypad 200f and the enter key 200g in the function setting window 40, the controller 112 controls the OSD signal generation module 106 to display the time-shift-machine recording setting window 50.

The time-shift-machine recording setting window 50 includes items such as "Time-shift-machine Recording - Yes/No" which indicates the current status of the time-shift-machine recording, "Recording Channel recording Time" and "System Maintenance".

If the viewer selects the time-shift-machine recording by using the cursor keypad 200f and the enter key 200g, the controller 112 controls the OSD signal generation module 106 to display a time-shift-machine recording window 60. FIG. 6 shows an example of the time-shift-machine recording window 60. In the time-shift-machine recording window 60, items indicating "Yes" and "No" are displayed. The viewer selects whether or not to execute the time-shift-machine recording by using the cursor keypad 200f and the enter key 200g.

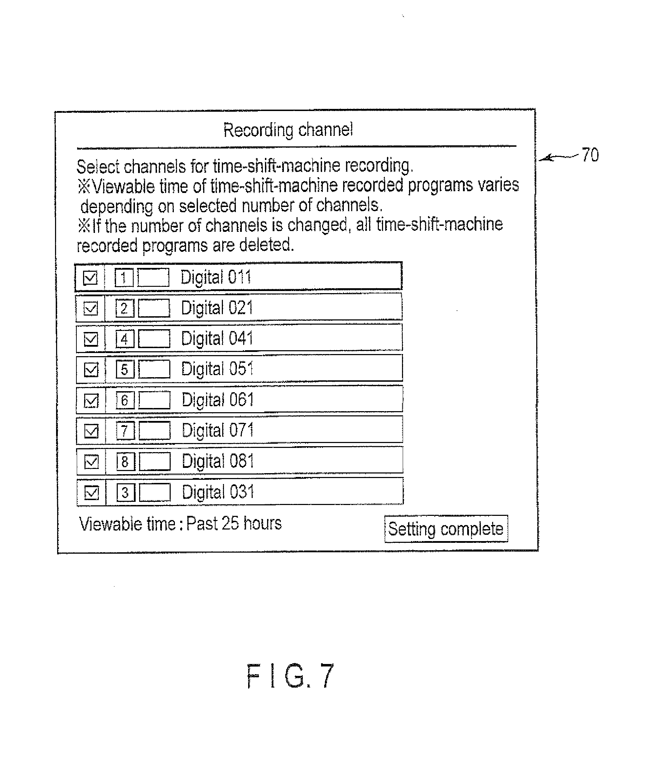

If the viewer selects a channel by using the cursor keypad 200f and the enter key 200g, the controller 112 controls the OSD signal generation module 106 to display a recording channel window 70. FIG. 7 shows an example of the recording channel window 70. In the recording channel window 70, the names of channels which can be selected and check boxes next to the names are displayed. The viewer selects a name of channel by marking the corresponding check box using the cursor keypad 200f and the enter key 200g. Then, the viewer selects a setting completion button to complete the recording channel setting.

If the viewer selects the item of recording time by using the cursor keypad 200f and the enter key 200g, the controller 112 controls the OSD signal generation module 106 to display a recording time window 80. The recording time window 80 includes a matrix in which time is represented by the vertical axis and days of the week by the horizontal axis. The viewer selects time for recording by using the cursor keypad 200f and sets or cancels the recording by using the enter key 200g. When the viewer selects a cell representing a day of the week or a time slot, the recording for the selected column or row can be set or cancelled in a single operation. When the setting is completed, the viewer selects the color button 200my, for example.

If the time-shift-machine recording is set in the above process, a program broadcast on the set channel and at the set time is automatically recorded, and the video signal, audio signal and program data signal which have been subjected to the predetermined signal processing at the signal processor 105 are recorded on the hard disk 112D. The programs recorded by the time-shift-machine recording function will be automatically deleted from the hard disk 112D if a predetermined time has elapsed.

In addition, the viewer can record a program which is being watched from the time when the viewer selects the recording key 200r of the remote controller 200. That is, if the controller 112 receives a signal indicating that the recording key 200r is selected, the controller 112 starts recording data of the program being watched represented by the video signal and audio signal output by the signal processor 105 on the hard disk 112D, a memory such as the nonvolatile memory 112C, or the recording means such as an external hard disk.

Further, the viewer can set recording or recording reservation by selecting a program from an electronic program table by using the cursor keypad 200f and the enter key 200g of the remote controller 200. That is, the controller 112 displays the electronic program table upon reception of a signal indicating that the program table key 200h of the remote controller 200 is selected and sets recording or recording reservation when the viewer selects a program.

Furthermore, the viewer can set recording or recording reservation by various recording functions such as a function of setting recording reservation by designating a particular channel and time, by using the remote controller 200.

An example of operation when the viewer freezeframes the program which is being broadcast after the above setting is completed will be explained.

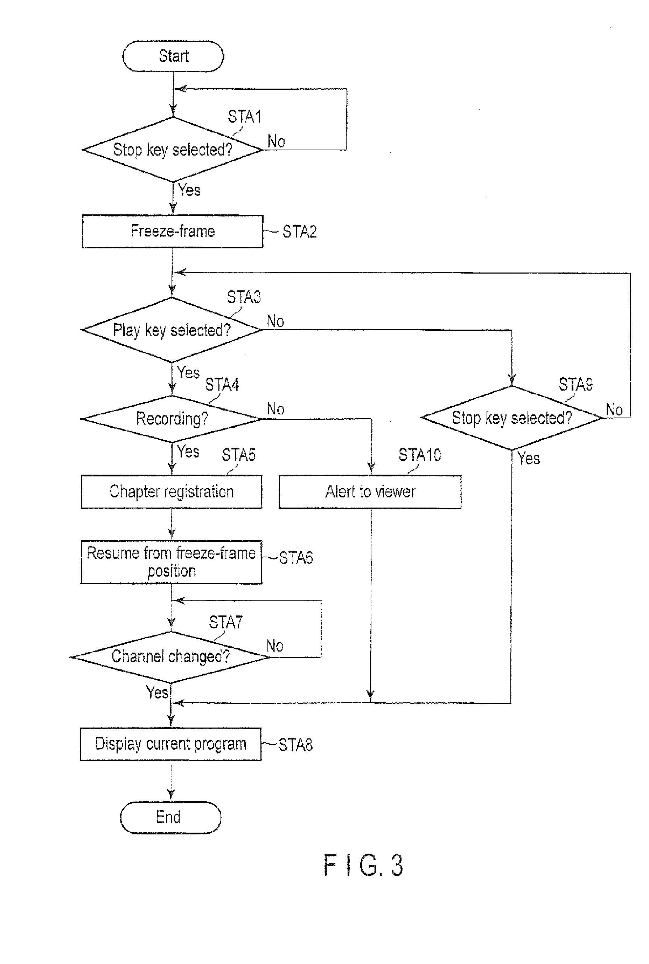

FIG. 3 shows a flowchart explaining an example of the operation of the broadcast receiving apparatus according to the embodiment. First, the controller 112 determines whether or not the stop key 200s of the remote controller 200 is selected (step STA1). If the stop key 200s is selected, the controller 112 controls the video processor 109 and the audio processor 108 to freeze-frame the program which is being watched (step STA2).

Next, the controller 112 determines whether or not the play key 200p of the remote controller 200 is selected (step STA3). If the play key 200p is selected, the controller 112 determines whether or not the program which was freeze-framed is being recorded by means of the time-shift-machine recording function or the other recording functions (step STA4).

If the program which was freeze-framed is recorded on the hard disk 112D, the freeze-frame position of the program is registered as a chapter (step STA5), and the program is played from the freeze-frame position by reading the audio signal and video signal of the program from the hard disk 112D (step STA6). Then, the controller 112 determines whether or not the viewer changes channels (step STA7). If the channel is changed, the program currently broadcast on the changed channel is displayed (step STA8).

If the play key 200p is not selected at step STA3, the controller 112 determines whether or not the stop key 200s is selected (step STA9). If the stop key 200s is selected, the freeze-frame of the program is ended, and the currently broadcast program on the same channel is displayed (step STA8). If the freeze-framed program has been already finished, a different program will be displayed. If the stop key 200s is not selected, the controller 112 determines whether or not the play key 200p is selected (step STA3).

At step STA4, it is determined that the program is not being recorded, the controller 112 controls the OSD signal generation module 106 to display a message indicating that the program cannot be played from the freeze-frame position, and start displaying the program currently broadcast on the same channel by ending the freeze-frame of the program (step STA8).

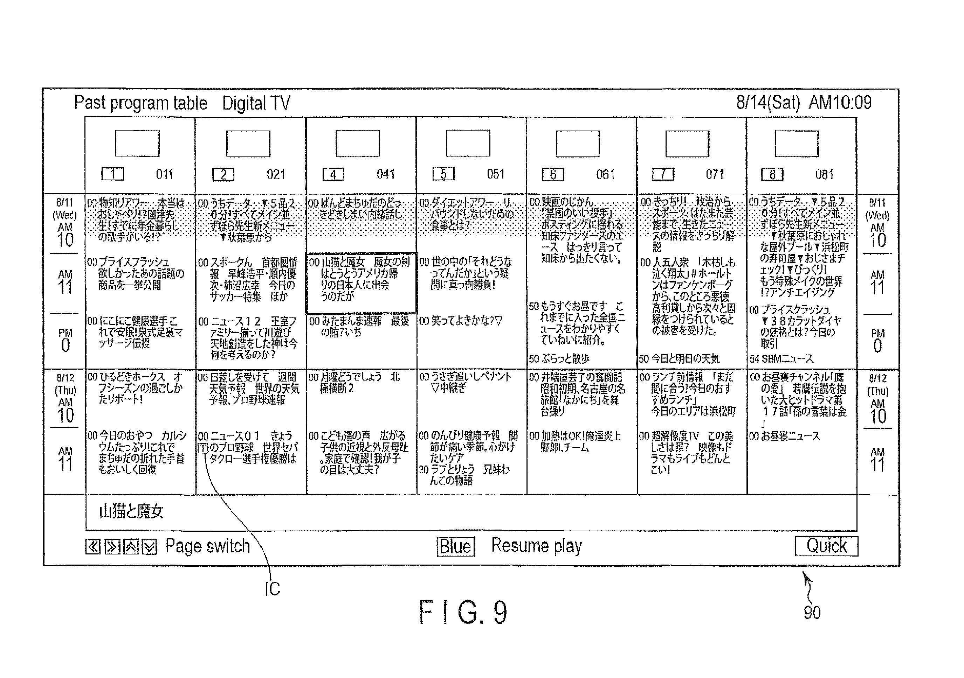

FIG. 9 shows an example of a past program table 90 which shows the past programs. If the viewer selects the time-shift key 200j of the remote controller 200, the controller 112 controls the OSD signal generation module 106 to display the past program table 90. The past program table 90 is a matrix in which time slots are indicated on the vertical axis, and channel names are indicated on the horizontal axis. The time-slot column includes only the time slots set to be recorded in the recording time window 80, and the channel row includes only the channels set to be recorded in the recording channel window 70.

If the viewer selects the stop key 200s while viewing the program, the controller 112 displays an icon IC next to the freeze-framed program to indicate the program that has been freeze-framed on the past program table 90. The viewer can select a program to be watched based on the icon displayed next to the program on the past program table 90.

With the above-mentioned features, when the viewer wishes to write down the displayed content while watching the program, or the viewer needs to leave the TV, the program can be freeze-framed by selecting the stop key 200s of the remote controller 200 and resumed from the freeze-frame position by selecting the play key 200p. In addition, if the stop key 200s is selected again instead of the play key 200p, the freeze-frame of the program is ended, and the program currently broadcast on the same channel can be displayed. According to the present embodiment, a broadcast receiving apparatus improved in terms of convenience for the user can be provided.

In addition, the viewer can easily find out the freeze-frame position when viewing the recorded program by registering the freeze-frame position as a chapter. This further improves convenience for the viewer.

In the above embodiments, the viewer selects the stop key 200s when freeze-framing the program being watched, and selects the play key 200p when resuming the program. However, the functions of the stop key 200s and the play key 200p may be assigned to the other keys. A first key functions as freeze-framing the program being watched, a second key functions as resuming the program from the freeze-frame position, and a third key functions as ending the freeze-frame of the program and displaying the currently broadcast program. The first and third keys may be the same key, and the first and second keys may be the same key. The first, second and third keys may be selected among the keys included in the remote controller 200 shown in FIG. 2. A key dedicated for freeze-framing the program being watched and a key dedicated for resuming the program may be provided in the remote controller 200. In any cases, the advantages of the broadcast receiving apparatus according to the above embodiment can be realized.

Further, the broadcast receiving apparatus according to the above embodiment includes the video display 111 and the speaker 110; however, the video display 111 and the speaker 110 may be externally attached to the broadcast receiving apparatus. The hard disk 112D which is included in the broadcast receiving apparatus in the above embodiment may also be externally attached to the broadcast receiving apparatus. In such cases, the advantages according to the above embodiment can be realized as well.

In the above embodiment, at step STA7 of FIG. 3, it is determined whether or not the viewer changes channels, and if the channel is changed, playing of the program on the previous channel which is recorded on the hard disk 112D is stopped. However, if the period set for time-shift-machine recording has elapsed, and the recorded program is finished, the currently broadcast program may be automatically displayed. In such a case, the advantages according to the above embodiment can be realized as well.

## Claims

1. A broadcast receiving apparatus (100) **characterized by** comprising:
a signal processor (105) configured to perform a predetermined signal processing on a received video signal;
a receiver (114) configured to receive a signal from a remote controller (200) including a first key (200s) and a second key (200p);
a controller (112) configured to control a recording module to record a program represented by the video signal output from the signal processor (105), to freeze-frame the program if a signal indicating selection of the first key is received, and to resume the program recorded in the recording module from a position where the program is freeze-framed if a signal indicating selection of the second key is received, and the program is being recorded.

2. The apparatus of Claim 1, **characterized in that** the controller (112) is configured to display a program currently broadcast on a channel same as the freeze-framed program if a signal indicating selection of the first key (200s) is received via the receiver (114) after freeze-framing the program.

3. The apparatus of Claim 1, **characterized in that** the remote controller (200) further comprises a third key, and the controller (112) is configured to display a program currently broadcast on a channel same as the freeze-framed program if a signal indicating selection of the third key is received via the receiver (114) after freeze-framing the program.

4. The apparatus of any one of Claims 1 to 3, **characterized by** further comprising a receiving module (104) comprising a plurality of tuners,
the controller (112) being configured to record a program to be broadcast on a particular channel, at a particular time on a particular day of the week.

5. The apparatus of any one of Claims 1 to 4, **characterized in that** the controller (112) is configured to register the position where the program is freeze-framed as a chapter if the program is being recorded.

6. The apparatus of any one of Claims 1 to 5, **characterized by** further comprising an OSD signal generation module (106) configured to generate an OLD signal, the apparatus **characterized in that** the controller (112) is configured to control the OSD signal generation module (106) to display a message indicating that the program cannot be displayed from the position where the program is freeze-framed if the program was not broadcast on the particular channel, at the particular time on the particular day of the week.

7. The apparatus of any one of Claims 1 to 6, **characterized by** further comprising a video display (111) configured to display a video signal output from the signal processor (105).

8. A control method for use in a broadcast receiving apparatus comprising:
a signal processor (105) configured to perform a predetermined signal processing on a received video signal;
a receiver (114) configured to receive a signal from a remote controller (200) including a first key (200s) and a second key (200p);
a controller (112) configured to control a recording module to record a program represented by the video signal output from the signal processor (105), to freeze-frame the program if a signal indicating selection of the first key (200s) is received, and to resume the program recorded in the recording module from a position where the program is freeze-framed if a signal indicating selection of the second key (200p) is received, and the program is being recorded,
the method being **characterized by** comprising:
freezing the program if a signal indicating selection of the first key (200s) is received via the receiver (114);
receiving a signal indicating selection of the second key (200p), and determining whether the program is being recorded; and
playing the program from a position where the program is freeze-framed by means of the recording module if the program is being recorded.
